# EUROPEAN PATENT APPLICATION

(11) **EP 4 697 473 A1**
(43) Date of publication of application: **18.02.2026**
(21) Application number: 24860370.6
(22) Date of filing: 27.08.2024
(51) Int. Cl.: H01M 50/291, H01M 50/293, H01M 50/367, H01M 50/211

(54) **BATTERY MODULE AND BATTERY PACK INCLUDING SAME**

(30) Priority: 01.09.2023 KR 20230116500; 04.09.2023 KR 20230117066
(71) Applicant: LG Energy Solution, Ltd., Seoul 07335 (KR)
(72) Inventor: LEE, Suhang, Daejeon 34122 (KR); SONG, Seung Min, Daejeon 34122 (KR)
(74) Representative: Plasseraud IP
(86) International application number: PCT/KR2024/012764
(87) International publication number: WO 2025/048450

(57) **Abstract**

The present disclosure relates to a battery module and a battery pack including the same, and the battery module capable according to an embodiment of the present disclosure includes a battery cell stack in which a plurality of battery cells are stacked; a module frame housing the battery cell stack; and end plates covering the front and rear surfaces of the battery cell stack, wherein the module frame is positioned while covering the battery cell stack, and includes an upper cover containing a plurality of holes, which are venting holes, and wherein a spacer assembly is positioned on the upper cover.

## Description

### [TECHNICAL FIELD]

### Cross Citation with Related Application(s)

This application claims the benefit of Korean Patent Application No. 10-2023-0116500 filed on September 1, 2023 and Korean Patent Application No. 10-2023-0117066 filed on September 4, 2023 in the Korean Intellectual Property Office, the disclosures of which are incorporated herein by reference in their entirety.

The present disclosure relates to a battery module and a battery pack including the same, and more particularly, to a battery module capable of ensuring the structural robustness and improving the safety, and a battery pack including the same.

### [BACKGROUND]

As technology development and demands for mobile devices increase, the demand for secondary batteries as energy sources is rapidly increasing. A lot of researches on secondary batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy storage source, there is a growing demand for a battery pack of a medium or large-sized module structure which is an assembly of battery modules in which a plurality of secondary batteries are connected in series/parallel.

Meanwhile, when a plurality of battery cells are connected in series or in parallel to configure a battery pack, it is common to configure a battery module composed of at least one battery cell first and then configure a battery pack by using at least one battery module and adding other components. Since battery cells constituting such a medium or large-sized battery module are composed of secondary batteries which can be charged and discharged, such a high-output large-capacity secondary battery generates a large amount of heat in a charge and discharge process. In this case, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charge and discharge. When the heat dissipation of battery cells is not properly performed, deterioration of the battery cells is accelerated, the life is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since multiple battery modules are concentratedly arranged to increase the mileage of the vehicle, a flame or heat generated in any one of the battery modules can easily propagate to an adjacent battery module, which may eventually lead to ignition or explosion of the battery pack itself.

Therefore, an attempt was made to facilitate discharge of high-temperature gas and flames in order to reduce the occurrence of the above problems.

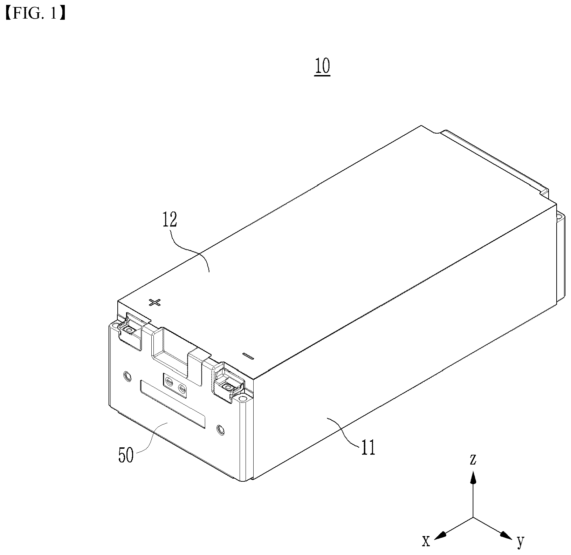

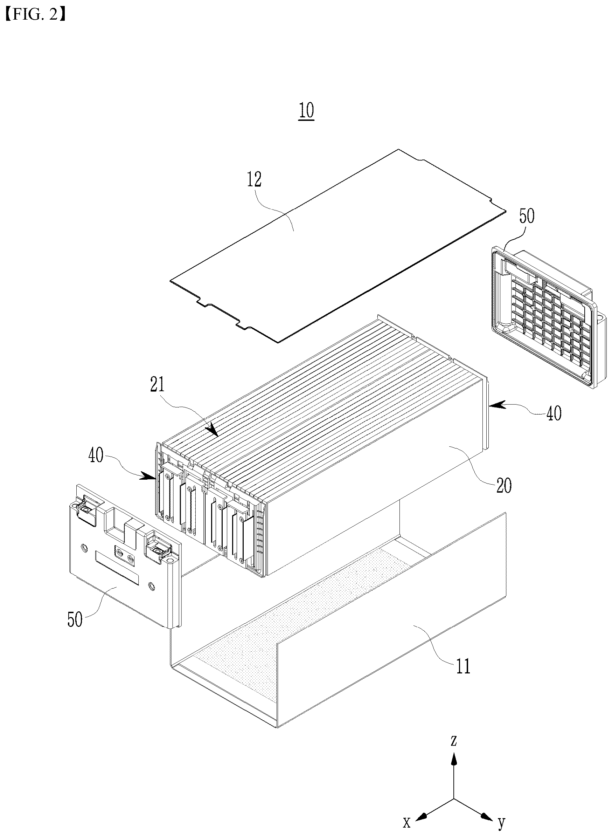

FIG. 1 is a diagram showing a conventional battery module. FIG. 2 is an exploded perspective view of the battery module of FIG. 1.

Referring to FIGS. 1 and 2, a conventional battery module 10 includes: a lower frame 11 mounted with a battery cell stack 21 in which a plurality of battery cells 20 are stacked, an upper frame 12 positioned while covering an upper part of the battery cell stack 21, a busbar assembly 40 positioned on the front and rear surfaces (x-axis direction and -x-axis direction) of the battery cell stack 21, and an end plate 50 covering the open front and rear surfaces of the module frames 11 and 12.

In a conventional battery module 10, if high-temperature gas or flame occurs in one battery cell 20, there is no configuration to safely discharge it to the outside, so that the pressure and temperature inside the battery module 10 may increase and eventually explode. If the battery module 10 explodes, the structure of the battery pack is also thermally deformed, and thus, gas and flame are not discharged smoothly to the outside, which causes a problem that safety is reduced due to the exposure of flames to the outside.

### [DETAILED DESCRIPTION OF THE INVENTION]

### [Technical Problem]

It is an object of the present disclosure to provide a battery module improved in structural robustness and safety and a battery pack including the same.

However, the problems to be solved by embodiments of the present disclosure are not limited to the above-described problems, and can be variously expanded within the scope of the technical idea included in the present disclosure.

### [Technical Solution]

According to an embodiment of the present disclosure, there is provided a battery module comprising: a battery cell stack in which a plurality of battery cells are stacked; a module frame that houses the battery cell stack; and end plates that cover the front and rear surfaces of the battery cell stack, wherein the module frame is positioned while covering the battery cell stack and includes an upper cover containing a plurality of holes, which are venting holes, and wherein a spacer assembly is positioned on the upper cover.

The spacer assembly may comprise a support part positioned on the upper cover, and a spacer positioned on the support part.

The spacer has a constant height, and the height of the spacer may be larger than the height of the support part.

The spacer assembly further comprises a first spacer, and a second spacer coupled on the first spacer, wherein the first spacer may comprise a (1-1) ^{th} surface that is in contact with the support part, a (1-2) ^{th} surface that is in contact with the second spacer, and an insertion hole which is a hole extending in a direction perpendicular to the (1-1)^{th} surface and the (1-2) ^{th} surface so that the second spacer is inserted and positioned.

The second spacer may be inserted through the insertion hole of the first spacer, and positioned so as to be hook-coupled to the (1-1)^{th} surface and the (1-2)^{th} surface.

The second spacer comprises a (2-1)^{th} protrusion part and a (2-2)^{th} protrusion part that are protruded in a direction perpendicular to a height direction of the second spacer, and a recessed part provided between the (2-1)^{th} protrusion part and the (2-2)^{th} protrusion part, wherein the recessed part is an area that is concavely recessed toward the center of the second spacer on the basis of an outer peripheral surface of the (2-1)^{th} protrusion part and the (2-2)^{th} protrusion part.

The (2-1) ^{th} protrusion part may be positioned in contact with the (1-1) ^{th} surface, and the (2-2) ^{th} protrusion part may be positioned in contact with the (1-2)^{th} surface.

The outer peripheral surface of the recessed part may be positioned in contact with the surfaces constituting the insertion hole.

The first spacer may comprise a steel, and the second spacer may comprise an elastic body.

The support part may be positioned on the upper cover excluding the venting hole.

The support part may comprise a first support part that extends along a width direction of the upper cover, and a second support part that is formed by being branched and extended from the first support part, and is extended along a length direction of the upper cover in a direction perpendicular to the first support part.

The first support part may comprise a (1-1)^{th} support part positioned at one end of the upper cover, and a (1-2) ^{th} support part positioned at the other end of the upper cover.

The second support part may extend from the (1-1)^{th} support part toward the (1-2)^{th} support part.

The second support part may be extended and positioned along a space between the venting holes positioned in the upper cover, and a space between the venting holes and the side surface part of the upper cover.

The support part may further comprise a coupling part, which is an area of the first support part that protrudes vertically in a direction opposite to the second support part.

The coupling part includes a coupling hole penetrating the coupling part in a height direction of the coupling part, a coupling groove is provided in an area of the end plate corresponding to the coupling hole, and a fastening member may be coupled with the coupling groove while passing through the coupling hole.

According to another embodiment of the present disclosure, there is provided a battery pack comprising: at least one battery module described above, a lower pack frame that houses the at least one battery module; and an upper pack frame that is positioned by being coupled with the lower pack frame while covering the at least one battery module.

The spacer assembly comprises a support part positioned on the upper cover, and a spacer positioned on the support part and having a predetermined height, one surface of the spacer is positioned in contact with the support part, and the other surface of the spacer may be positioned in contact with the upper pack frame.

The spacer may comprise a first spacer positioned in contact with the support part, and a second spacer assembled and coupled to the first spacer and positioned in contact with the upper pack frame.

A venting area, which is a space equivalent to the height of the spacer, may be provided between the upper cover and the upper pack frame.

### [Advantageous Effects]

According to embodiments, by providing a spacer assembly, it is possible to secure a venting path within the battery pack while securing a structural robustness of a battery pack, thereby improving the safety of the battery.

Effects of the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 is a diagram showing a conventional battery module.
FIG. 2 is an exploded perspective view of the battery module of FIG. 1.
FIG. 3 is a perspective view of a battery pack according to an embodiment of the present disclosure.
FIG. 4 is an exploded perspective view of the battery pack of FIG. 3.
FIG. 5 is a perspective view of a battery module according to an embodiment of the present disclosure.
FIG. 6 is an exploded perspective view of the battery module of FIG. 5.
FIG. 7 is a perspective view of the spacer assembly of FIG. 5.
FIG. 8 is a diagram showing an area A1 of FIG. 5.
FIG. 9 is a perspective view showing a battery module according to another embodiment of the present disclosure.
FIG. 10 is a perspective view of the spacer assembly of FIG. 9.
FIG. 11 is a drawing showing an area B1 of FIG. 9.
FIG. 12 is a transparent perspective view of the spacer of FIG. 10.
FIG. 13 is a perspective view of the first spacer of FIG. 12.
FIG. 14 is a side view of the second spacer of FIG. 12.
FIG. 15 is a cross-sectional view showing the structural connection relationship between the battery module and the battery pack according to an embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are shown to be exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

The terms first, second, etc. may be used herein to describe various components, but the components are not to be limited by the terms. The terms may only be used for the purpose of distinguishing one component from another.

Further, in this application, the upper part and the lower part may be defined as meaning the z-axis direction and the -z-axis direction, the side surface as meaning the y-axis direction and the -y-axis direction, and the front surface and the rear surface as meaning the x-axis direction and the -x-axis direction, respectively. However, these names are arbitrarily defined within the specification for convenience, and the scope of rights is not limited to such names and directions.

Further, in this specification, the inside direction may mean a direction toward the center of the battery module, and the outside direction may mean a direction toward the outside of the battery module.

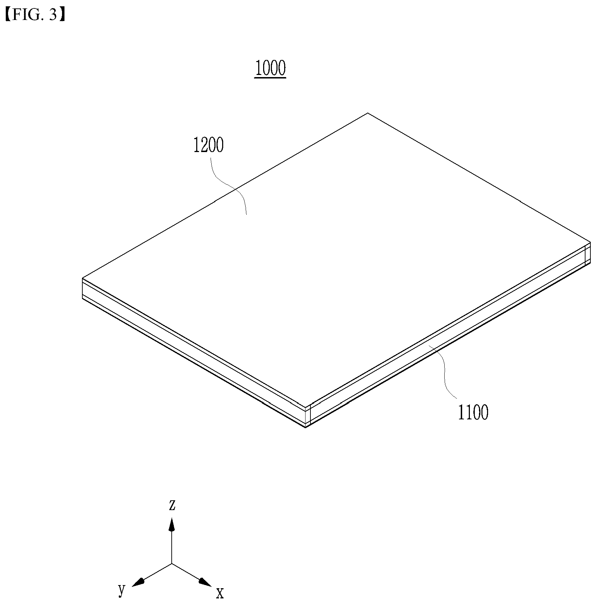

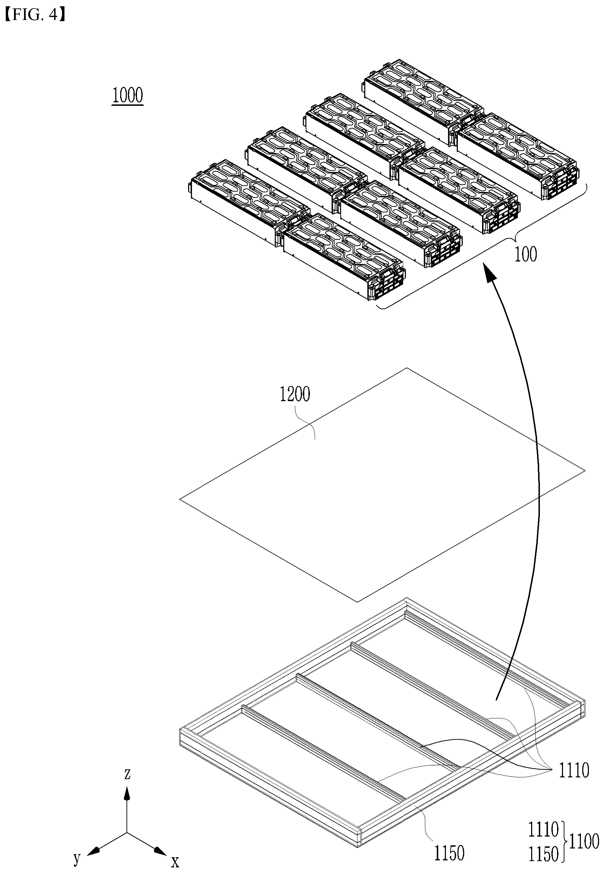

FIG. 3 is a perspective view of a battery pack according to an embodiment of the present disclosure. FIG. 4 is an exploded perspective view of the battery pack of FIG. 3.

Referring to FIGS. 3 and 4, a battery pack 1000 according to the present embodiment comprises a lower pack frame 1100 on which a plurality of battery modules 100 are mounted, and an upper pack frame 1200 positioned at an upper part of the battery module 100. Herein, the lower pack frame 1100 and the upper pack frame 1200 may be coupled to each other by a method such as welding to seal the inside of the battery pack 1000.

The lower pack frame 1100 has at least two internal beams 1110 and a side pack frame 1150 formed on the bottom surface of the lower pack frame 1100. More specifically, the lower pack frame 1100 includes at least two internal beams 1110 and a side pack frame 1150 protruding from the bottom surface of the lower pack frame 1100 toward the upper frame 1200. Here, the bottom surface of the lower pack frame 1100 may be coupled to the at least two internal beams 1110 and the side pack frame 1150 by a method such as welding.

The side pack frame 1150 may extend along the edge of the bottom surface of the lower pack frame 1100. More specifically, the side pack frame 1150 may extend along each corner of the bottom surface of the lower pack frame 1100. Herein, the upper surface of the side pack frame 1150 may be in contact with the upper pack frame 1200. At this time, the upper surface of the side pack frame 1150 and the upper pack frame 1200 may be coupled to each other by a method such as welding to seal the inside of the battery pack 1000.

At least two inner beams 1110 may be vertical beams, which may be formed by extrusion molding. In this figure, at least two inner beams 1110 are only shown as being positioned only toward the x-axis direction, but are not limited thereto, and may be cross beams positioned so as to cross the lower pack frame 1100 in the y-axis direction.

The side pack frame 1150 and at least two internal beams 1110 may partition a plurality of battery modules 100 from each other. In other words, the plurality of battery modules 100 may be respectively arranged in an area positioned between the side pack frame 1150 and at least two internal beams 1110. More specifically, in the battery pack 1000, a pair of battery modules 100 may be arranged between a pair of internal beams 1110 that are positioned adjacent to each other among the at least two internal beams 1110 and the side pack frame 1150. Herein, the pair of battery modules 100 are spaced apart from each other, but may be arranged in a direction opposite to each other. As an example, the pair of battery modules 100 may be arranged in a direction in which the end plates (not shown) included in each battery module 100 face each other.

In this case, at least two inner beams 1110 may be spaced apart from each other. The distance by which at least two inner beams 1110 are spaced apart from each other may be equal to or larger than the size of the battery module 100. Furthermore, the end parts of the inner beams 1110 may be in contact with the inner surface of the side pack frame 1150. More specifically, both end parts of the inner beams 1110 may be in contact with the inner surface of the side pack frame 1150, respectively.

Therefore, at least two inner beams 1110 and the side pack frame 1150 may surround a plurality of battery modules 100, thereby protecting each battery module 100 from external impact.

The battery module 100 mounted in the battery pack 1000 according to an embodiment of the present disclosure will be described in detail below.

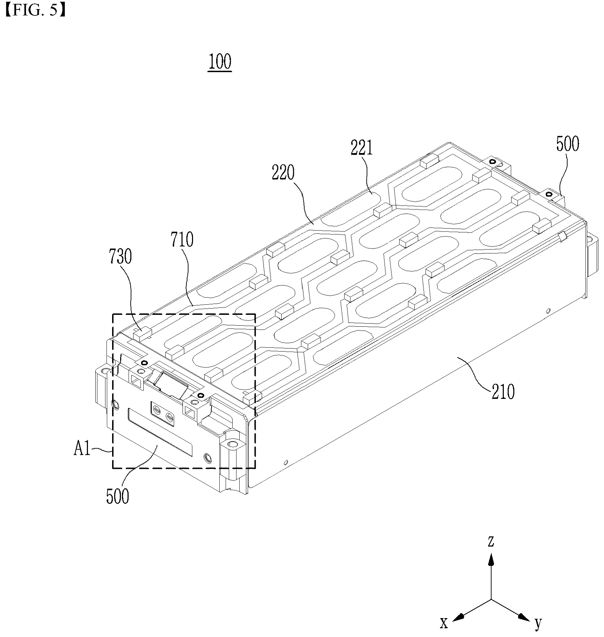

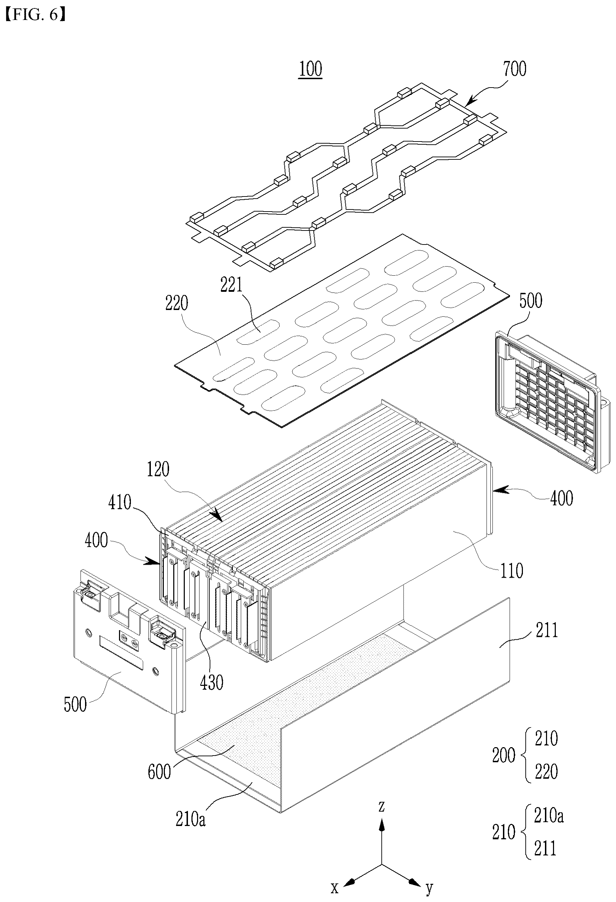

FIG. 5 is a perspective view of a battery module according to an embodiment of the present disclosure. FIG. 6 is an exploded perspective view of the battery module of FIG. 5.

Referring to FIGS. 5 and 6, a battery module 100 according to an embodiment of the present disclosure may include a battery cell stack 120 in which a plurality of battery cells 110 are stacked along one direction, a module frame 200 that houses the battery cell stack 120, a busbar assembly 400 positioned on a front surface and/or a rear surface of the battery cell stack 120, an end plate 500 that covers the front surface and/or the rear surface of the battery cell stack 120, a thermally conductive resin layer 600 that adhesively fixes the battery cell stack 120 to the module frame 200, and a spacer assembly 700 positioned on the module frame 200.

First, the battery cell 110 may be a pouch-type battery cell. Such a pouch-type battery cell may be formed by housing an electrode assembly in a pouch case made of a laminate sheet including a resin layer and a metal layer, and then heat-fusing a sealing part of the pouch case. In this case, the battery cell 110 may be formed in a rectangular sheet-like structure.

Such battery cells 110 may be configured in a plurality of numbers, and the plurality of battery cells 110 are stacked so as to be electrically connected to each other, thereby forming a battery cell stack 120. In particular, a plurality of battery cells 110 may be stacked along a direction parallel to the y-axis as shown in FIG. 6.

The module frame 200 that houses the battery cell stack 120 may include a lower frame 210 and an upper cover 220.

The lower frame 210 may include a bottom part 210a and two side parts 211 extending upward from both end parts of the bottom part 210a. The bottom part 210a may cover the lower part (-z-axis direction) of the battery cell stack 120, and the side parts 211 may cover both side surface parts (y-axis direction and -y-axis direction) of the battery cell stack 120.

Although not disclosed herein, the lower frame 210 may be a frame whose bottom part 210a constitutes a part of a heat sink. For example, the bottom part 210a may constitute the upper surface of the heat sink. In this case, the heat sink may be formed integrally with one surface of the module frame 200, thereby improving the cooling performance of the battery module and also increasing the energy density of the battery.

The upper cover 220 may be configured to cover the upper part of the battery cell stack 120. The upper cover 220 may be a plate-shaped member that covers the upper part of the battery cell stack 120. The upper cover 220 may be a plate-shaped member that covers the remaining upper part (z-axis direction) of the battery cell stack 120 except for the lower part and both side surface parts that are surrounded by the lower frame 210.

The upper cover 220 and the lower frame 210 are coupled by welding or the like in a state where the corresponding corner parts are in contact with each other, thereby forming a structure that covers the battery cell stack 120 in upper, lower, left and right directions. Therefore, the battery cell stack 120 may be physically protected via the upper cover 220 and the lower frame 210. For this purpose, the upper cover 220 and the lower frame 210 may include a metal material having a predetermined strength.

The upper cover 220 can include a plurality of venting holes 221 penetrating the upper cover 220.

The venting holes 221 can be holes penetrating the upper cover 220 in the height direction (z-axis direction). When a venting gas is generated in the battery cell 110, the venting gas and particles can move from the inside of the module frame 200 to the outside through the venting holes 221.

The module frame 200 may be intended to protect the battery cell stack 120 and the electrical components connected thereto from external physical impact. The module frame 200 may house the battery cell stack 120 and the electrical components connected thereto in the internal space of the module frame 200.

Meanwhile, although not specifically shown in the figure, the structure of the module frame 200 is not limited thereto, and the module frame 200 according to a modified embodiment may be a mono frame in the form of a metal plate in which the upper surface, lower surface, and both side surfaces are integrated. That is, this is not a structure in which the lower frame 210 and the upper cover 220 are coupled to each other, but may be provided in a structure that is manufactured by extrusion molding so that the upper surface, lower surface, and both side surfaces are integrated,

Furthermore, the structure of the module frame 200 may be provided in an L-shaped frame structure in addition to the mono frame or U-shaped frame, the upper cover 220 may cover the upper part and both side surface parts of the battery cell stack 120 together as in the lower frame 210 of the present disclosure, and may be provided in various structures that are not described in the above-mentioned embodiments.

The module frame 200 may be provided in a shape opened along the longitudinal direction (x-axis direction) of the battery cell stack 120. In this case, the front surface and the rear surface of the battery cell stack 120 may be not hidden by a module frame 200. The front surface and the rear surface of the battery cell stack 120 may be hidden by a busbar assembly 400, an end plate 500, and the like, through which the front surface and the rear surface of the battery cell stack 120 will be able to be protected from external physical impacts or the like.

The busbar assembly 400 includes a busbar frame 410, and busbar 430 mounted on one surface of the busbar frame 410.

The busbar frame 410 may be positioned on one surface of the battery cell stack 120 to cover one surface of the battery cell stack 120 and, at the same time, guide the connection between the battery cell stack 120 and an external device. The busbar frame 410 may be positioned on the front surface and the rear surface of the battery cell stack 120. A busbar 430 may be mounted on the busbar frame 410.

The busbar frame 410 may include an electrically insulating material. The busbar frame 410 may limit contact of the busbar 430 with other portions of the battery cells 110 other than the portion joined with an electrode lead, and may also prevent occurrence of an electrical short circuit.

The busbar 430 is mounted on one surface of the busbar frame 410, and may electrically connect the battery cells 110 or the battery cell stack 120 to an external device circuit. The busbar 430 is positioned on the busbar frame 410, and covered by the end plate 500, thereby being able to be protected from external impacts, etc., and minimizing deterioration of the battery durability due to external moisture, etc.

The end plate 500 can be coupled (joined, sealed, or hermetically sealed) with the module frame 200 while covering the busbar assembly 400 positioned on one surface of the battery cell stack 120. Each corner of the end plate 500 may be coupled to a corresponding corner of the module frame 200 by a method such as welding.

That is, the end plate 500 can hermetically seal an open surface of the module frame 200 to thereby protect the battery cell stack 120 and electrical components connected thereto from external physical impacts. For this purpose, the end plate 500 may be made from a material having a predetermined strength. For example, the end plate 500 may include a metal such as aluminum.

The thermally conductive resin layer 600 can be positioned in contact with one surface of the module frame 200. The thermally conductive resin layer 600 can be positioned in contact with the battery cell stack 120 and the bottom part 210a of the module frame 200. That is, one surface of the thermally conductive resin layer 600 is in contact with the battery cell stack 120, and the other surface of the thermally conductive resin layer 600 is positioned in contact with the bottom part 210a of the module frame 200, so that heat generated from the battery cell 110 can be transferred to the outside via the module frame 200.

The spacer assembly 700 can be positioned on the upper cover 220. The spacer assembly 700 may be positioned on the outer surface of the upper cover 220.

The spacer assembly 700 may be positioned on the upper cover 220 while having a constant height. In this case, the spacer assembly 700 may be positioned in contact with the upper cover 220 and the upper pack frame 1200 (see FIGS. 3 and 4) of the battery pack facing the upper cover 220.

Therefore, the spacer assembly 700 can form and maintain a certain space between the upper cover 220 and the upper pack frame 1200. Consequently, even if thermal deformation of the upper pack frame 1200 occurs in a high temperature state when a thermal runaway phenomenon occurs in the battery module 100, the upper pack frame 1200 can be supported by the spacer assembly 700, thereby maintaining a venting path between the battery module 100 and the battery pack. That is, a moving path of venting gas and particles generated in the battery module 100 can be secured, thereby enabling rapid heat discharge to the outside of the battery pack. This reduces the temperature and pressure inside the battery, thereby preventing explosions and external exposure to flames, and improving the safety of the battery.

This spacer assembly 700 will be described in more detail below.

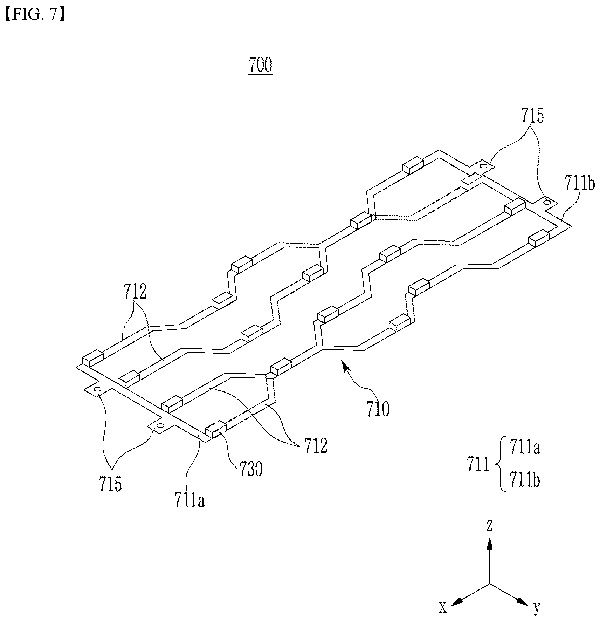

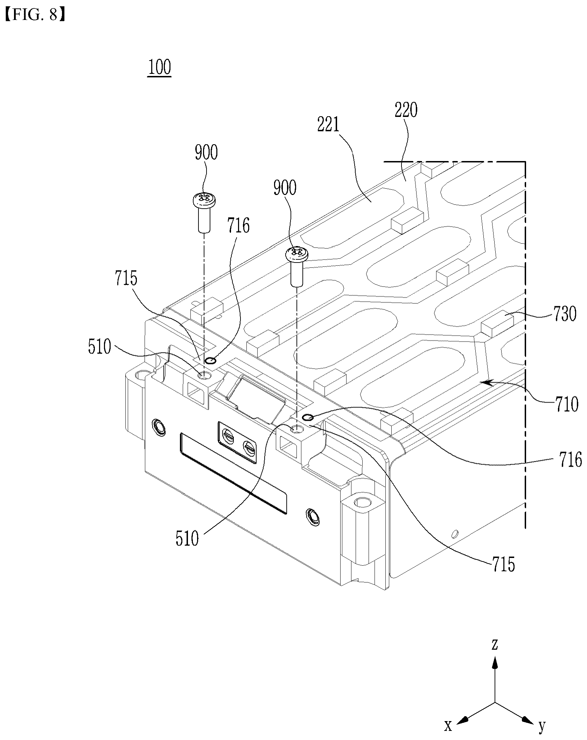

FIG. 7 is a perspective view of the spacer assembly of FIG. 5. FIG. 8 is a diagram showing an area A1 of FIG. 5.

Referring to FIGS. 7 and 8, in the battery module 100 according to an embodiment of the present disclosure, the spacer assembly 700 provided on the upper cover 220 may be positioned by being coupled with the end plate 500.

The spacer assembly 700 according to an embodiment of the present disclosure may include a support part 710 and a spacer 730.

The support part 710 may be a thin plate positioned on the upper cover 220. The support part 710 can function as a support on which a spacer 730 may be positioned. One surface of the support part 710 may be positioned in contact with the upper cover 220, and the other surface of the support part 710 may be positioned in contact with the spacer 730.

Specifically, the support part 710 may be positioned on the upper cover 220 excluding the venting hole 221. In this case, the support part 710 may include a first support part 711 extending along the width direction (y-axis direction) of the upper cover 220 and a second support part 712 extending along the length direction (x-axis direction) of the upper cover 220 in a direction perpendicular to the first support part 711.

The first support part 711 may be positioned at one end and the other end of the upper cover 220. At this time, the one end and the other end of the upper cover 220 may mean edges positioned at a front surface and a rear surface of the upper cover 220, respectively.

In this case, the first support part 711 positioned at one end of the upper cover 220 may be defined as a (1-1)^{th} support part 711a, and the first support part 711 located at the other end of the upper cover 220 may be defined as a (1-2)^{th} support part 711b. The (1-1)^{th} support part 711a and the (1-2)^{th} support part 711b may be positioned opposite to each other.

The second support part 712 may be configured to extend in a direction perpendicular to the first support part 711. Specifically, the second support part 712 may extend from the (1-1)^{th} support part 711a toward the (1-2)^{th} support part 712b.

The second support part 712 may be positioned to extend along a space between the venting holes 221 positioned on the upper cover 220 and a space between the venting holes 221 and the side surface part of the upper cover 220.

According to this figure, the second support part 712 may be provided by being branched and extended from the first support part 711 into four. However, the number of the second support part 712 is not limited thereto, and can include all configurations that can be easily changed from the perspective of a person of ordinary skill in the art.

Further, according to this figure, since the venting holes 221 are positioned in a zigzag shape on the upper cover 220, the second support part 712 may not be extended to a form like a straight line. That is, the second support part 712 can change the direction in which it extends according to the position of the venting hole 221. Specifically, in some cases, a plurality of second support parts 712 may be connected as one and extended, or one second support part 712 may be branched into two and extended. The shape of this second support part 712 is not limited to this figure, and may be provided in various forms according to the position of the venting hole 221, etc.

In addition, the support part 710 may include a coupling part 715 that protrudes in a vertical direction from the first support part 711.

The coupling part 715 may be a region protruding in a vertical direction from the first support part 711, which may be a region protruding in the opposite direction from the second support part 712. That is, the coupling part 715 may be a region protruding in the opposite direction from the second support part 712 from the (1-1)^{th} support part 711a and the (1-2)^{th} support part 711b.

The coupling part 715 may be coupled with the end plate 500 to allow the support part 710 to be more stably positioned on the upper cover 220.

Specifically, referring to FIG. 8, the coupling part 715 is coupled via the end plate 500 and the fastening member 900, and thus can be fixedly positioned on the upper cover 220.

The coupling part 715 may include a coupling hole 716 through which the fastening member 900 may pass. The coupling hole 716 may be a hole that penetrates the coupling part 715 in the height direction (z-axis direction).

The end plate 500 may include a coupling groove 510 provided on one surface facing the coupling hole 716.

The coupling hole 716 and the coupling groove 510 may be positioned opposite to each other. In this case, the fastening member 900 may be fixed by coupling with the coupling groove 510 while penetrating the coupling hole 716. The fastening member 900 may be, for example, a bolt and a nut, or a screw.

Since the coupling hole 716 and the coupling groove 510 are coupled by the fastening member 900, the support part 710 can be more firmly fixed and coupled to the end plate 500. Therefore, the support part 710 can be stably positioned on the upper cover 220.

A spacer 730 may be positioned on the support part 710. The number of the spacer 730 may be plural. The spacer 730 may be configured to have a constant height while being positioned on the support part 710. Referring to FIGS. 5 to 8, the spacer 730 may have a rectangular parallelepiped shape having a constant height, but is not limited to this shape and may have other shapes as described below.

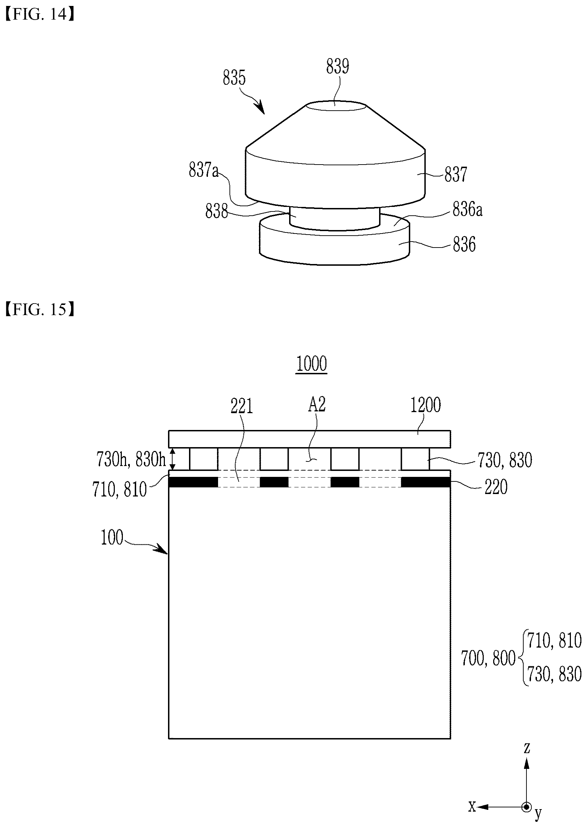

One surface of the spacer 730 may be positioned in contact with the support part 710, and the other surface of the spacer 730 may be positioned in contact with the upper pack frame 1200 (see FIGS. 3 and 4) positioned opposite to the upper cover 220. Therefore, the spacer 730 may enable a certain space to form and maintain between the upper cover 220 and the upper pack frame 1200. Herein, the space formed between the upper cover 220 and the upper pack frame 1200 may be a venting path through which the venting gas discharged through the venting hole 221 may move within the battery pack. This will be described in detail below in FIG. 15.

The spacer 730 may have a much larger height than the support part 710. Specifically, the support part 710 may be a member such as a thin plate, and the spacer 730 may be configured to have a height larger than that of the support part 710. Therefore, a certain space may be formed between the upper cover 220 and the upper pack frame 1200 by the height of the spacer 730, and the space may be a venting path through which venting gas generated from the battery module 100 may move within the battery pack.

The spacer assembly 700 including the support part 710 and the spacer 730 may be formed of a material that has rigidity and is resistant to high temperatures. For example, the spacer assembly 700 may include a steel. The support part 710 and the spacer 730 may be coupled by welding.

Since the spacer assembly 700 includes a steel, even if a thermal runaway phenomenon occurs in the battery module 100 according to an embodiment of the present disclosure, the shape of the spacer assembly 700 can be maintained at a high temperature.

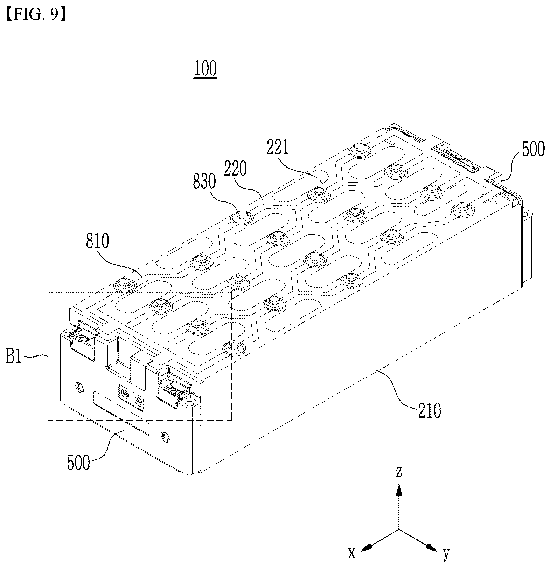

Meanwhile, the spacer 730 is not limited to the shape set forth above, and as described below, the spacer 830 may be formed by coupling the first spacer 831 and the second spacer 835, respectively. This will be described in more detail below with reference to FIGS. 9 to 14.

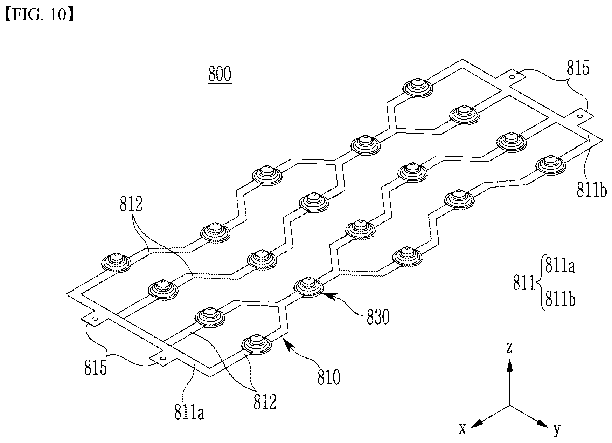

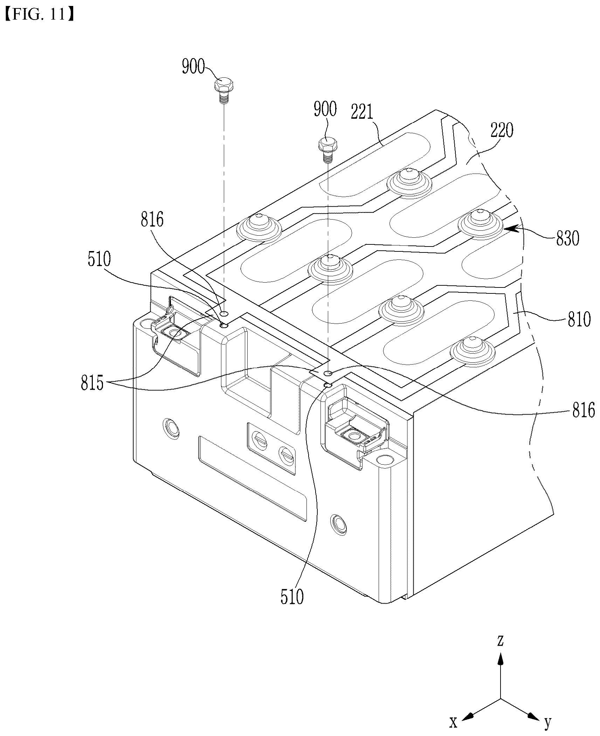

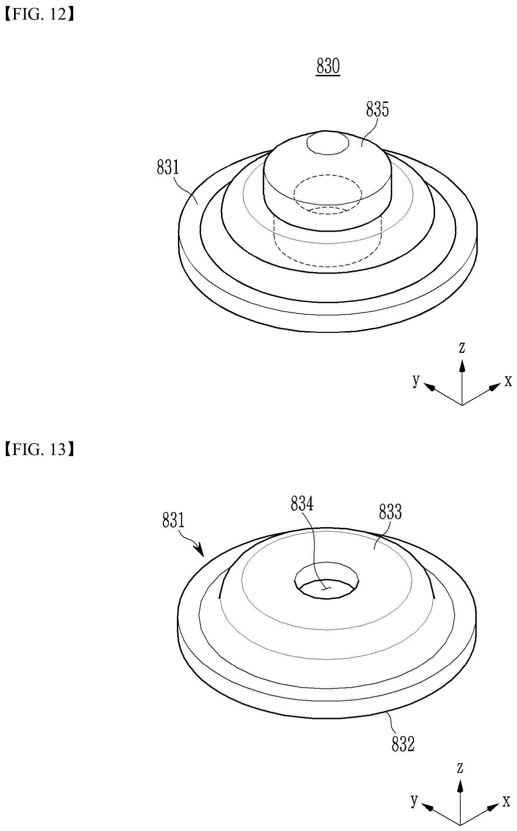

FIG. 9 is a perspective view showing a battery module according to another embodiment of the present disclosure. FIG. 10 is a perspective view of the spacer assembly of FIG. 9. FIG. 11 is a drawing showing an area B1 of FIG. 9. FIG. 12 is a transparent perspective view of the spacer of FIG. 10. FIG. 13 is a perspective view of the first spacer of FIG. 12. FIG. 14 is a side view of the second spacer of FIG. 12. Meanwhile, in the following, the same or proper reference numerals are given to the same or proper constituent elements as in the battery module according to the embodiments shown in FIGS. 5 to 8, and the detailed description thereof will be omitted.

Referring to FIGS. 9 to 14, a spacer 830 according to another embodiment of the present disclosure includes a first spacer 831 positioned by being connected with a support part 810, and a second spacer 835 positioned by being assembled with the first spacer 831. The first spacer 831 and the second spacer 835 may be formed of the same material, or may be formed of different materials.

The first spacer 831 may be positioned in contact with the support part 810, so that a certain space may be formed and maintained between the upper cover 220 and the upper pack frame 1100.

Referring to FIGS. 12 and 13, the first spacer 831 may be configured such that the upper and the lower surfaces are flat, and a hole is provided in the center part to have a certain height. Herein, the lower surface of the first spacer 831 may be a (1-1)^{th} surface 832, the upper surface thereof may be a (1-2)^{th} surface 833, and the hole provided in the center part may be an insertion hole 834.

The (1-1)^{th} surface 832 may be a surface that is in in contact with the support part 810, and the (1-2)^{th} surface 833 may be a surface that is in contact with the second spacer 835.

The insertion hole 834 may be a hole that extends in a direction perpendicular to the (1-1)^{th} surface 832 and the (1-2)^{th} surface 833, which may be a hole that penetrates the (1-1)^{th} surface 832 and the (1-2)^{th} surface 833. A second spacer 835 may be inserted and positioned in the insertion hole 834.

The first spacer 831 may be formed of a material that has rigidity and is resistant to high temperatures. For example, the first spacer 831 may include a steel. Since the first spacer 831 includes a steel, even if a thermal runaway phenomenon occurs in the battery module 100 according to an embodiment of the present disclosure, the shape of the spacer 830 may be maintained at a high temperature.

The second spacer 835 may be positioned by being assembled and coupled to the first spacer 831.

Referring to FIGS. 12 to 14, the second spacer 835 may be inserted through the insertion hole 834 of the first spacer 831 and then positioned in a state of being hook-coupled to the (1-1)^{th} surface 832 and the (1-2)^{th} surface 833.

The second spacer 835 includes a (2-1)^{th} protrusion part 836 and a (2-2)^{th} protrusion part 837 that protrude in a direction perpendicular to the height direction of the second spacer 835, and a recessed part 838 may be provided between the (2-1)^{th} protrusion part 836 and the (2-2)^{th} protrusion part 837. Herein, the (2-1)^{th} protrusion part 836 may be a protrusion part positioned at the lower part of the second spacer 835, and the (2-2)^{th} protrusion part 837 may be a protrusion part positioned at the upper part of the second spacer 835.

The recessed part 838 may be a region of the second spacer 835 that is concavely recessed toward the center part on the basis of the outer peripheral surface of the (2-1)^{th} protrusion part 836 and the (2-2)^{th} protrusion part 837.

The recessed part 838 of the second spacer 835 can be positioned by being mounted in the insertion hole 834 of the first spacer 831. Specifically, the outer peripheral surface of the recessed part 838 can be positioned in contact with the surfaces constituting the insertion hole 834 of the first spacer 831.

At this time, the (2-1)^{th} protrusion part 836 of the second spacer 835 can be positioned in contact with the (1-1)^{th} surface 832 of the first spacer 831, and the (2-2)^{th} protrusion part 837 of the second spacer 835 can be positioned in contact with the (1-2)^{th} surface 833 of the first spacer 831. Specifically, the upper surface 836a of the (2-1)^{th} protrusion part 836 may be positioned in contact with the (1-1)^{th} surface 832 of the first spacer 831, and the lower surface 837a of the (2-2)^{th} protrusion part 837 of the second spacer 835 may be positioned in contact with the (1-2)^{th} surface 833 of the first spacer 831.

That is, as described above, the second spacer 835 is inserted and hook-coupled into the first spacer 831, so that the second spacer 835 can be positioned more stably on the first spacer 831.

The second spacer 835 may include a second surface 839, which is the uppermost surface of the second spacer 835. The second surface 839 may be one surface of the second spacer 835 that is in contact with the upper pack frame 1200.

Although the second surface 839 is shown as a flat surface, this does not correspond thereto, and may be a deflected region, such as surfaces connecting the second surface 839 and the (2-2)^{th} protrusion part 837.

The second spacer 835 may be formed of a material having elasticity. For example, the second spacer 835 may include a rubber. Since the second spacer 835 is formed of an elastic body, the second spacer 835 may function as a buffer.

Furthermore, since the second spacer 835 is formed of an elastic body and the shape is easily changed, the second spacer 835 can be inserted and coupled into the insertion hole 834 of the first spacer 831.

Specifically, when an impact is applied to the battery module or battery pack of the present disclosure, the second spacer 835 can absorb part of the impact, thereby minimizing the impact given to other components. Furthermore, when vibration, etc. is applied to the battery module or pack, the second spacer 835 can absorb part of the impact, thereby reducing noise and vibration. Therefore, the structural stability of the battery can be improved.

The spacer 830 including the first spacer 831 and the second spacer 835 can be weld-coupled to the support part 810. Specifically, the first spacer 831 can be weld-coupled to the support part 810. More specifically, the (1-1)^{th} surface 832 of the first spacer 831 can be weld-coupled to the support part 810. Therefore, the spacer 830 is more firmly and securely fixed to the support part 810, and maintains a coupling relationship even against external impact, etc., thereby ensuring a vent path between the battery module and the battery pack.

FIG. 15 is a cross-sectional view showing the structural connection relationship between the battery module and the battery pack according to an embodiment of the present disclosure.

Referring to FIGS. 5, 9 and 15, a spacer assembly 700 according to an embodiment of the present disclosure can be positioned in contact with a battery module 100 and a battery pack 1000.

The spacer assemblies 700 and 800 of the present disclosure includes the support parts 710 and 810 and the spacers 730 and 830. In this case, the support parts 710 and 810 may be positioned in contact with the battery module 100, and the spacers 730 and 830 positioned on the support parts 710 and 810 may be positioned in contact with the battery pack 1000.

Specifically, the support parts 710 and 810 can be positioned in contact with the upper cover 220 positioned on the upper part of the battery module 100, and the spacers 730 and 830 may be positioned in contact with the upper pack frame 1200 of the battery pack 1000.

In this case, a space as large as the height (730h, 830h) of the spacer may be provided between the battery module 100 and the battery pack 1000. That is, a space may be provided by the heights 730h and 830h of the spacer between the upper cover 220 and the upper pack frame 1200.

Herein, in the case of the spacer assembly 800 according to another embodiment of the present disclosure, the spacer 830 positioned in contact with the upper pack frame 1200 of the battery pack 1000 may be the second spacer 835 described in FIGS. 12 and 14. Furthermore, the height 830h of the spacer may be the total height of the spacer 830 in which the first spacer 831 and the second spacer 835 of FIGS. 12 to 14 are coupled. That is, the height 830h of the spacer according to another embodiment of the present disclosure may mean the height from the (1-1)^{th} surface 832 of the first spacer 831 to the second surface 839 of the second spacer 835.

The space as large as the heights 730h and 830h of the spacer provided between the upper cover 220 and the upper pack frame 1200 may be a venting area A2.

When a thermal runaway phenomenon occurs in the battery module 100, the venting gas and particles may be discharged to the outside of the battery module 100 through the venting hole 221. In this case, the venting gas and particles may move inside the battery pack 1000 through the venting area A2 and be discharged to the outside of the battery.

However, when a thermal runaway phenomenon occurs, the upper pack frame 1200 may be thermally deformed due to the increase in temperature inside the battery. Specifically, the upper pack frame 1200 can be thermally deformed under high temperature conditions, so that the shape of the upper pack frame 1200 can be locally changed by being deflected to the upper cover 220.

In this case, since a configuration such as a spacer assembly is not provided in a general battery pack (conventional battery pack), the deflecting phenomenon of the upper pack frame may cause clogging of the venting path. In other words, due to this change in shape of the upper pack frame, the venting gas and particles generated in the battery module are not discharged smoothly, so that the temperature inside the battery increases, which may cause an explosion, etc.

In contrast, the battery pack 1000 of the present disclosure has a spacer assemblies 700 and 800 provided on the upper cover 220 supporting the upper pack frame 1200, and therefore, even if the upper pack frame 1200 is thermally deformed, the upper pack frame 1200 can be less deflected that a conventional general battery pack. That is, since the spacer assemblies 700 and 800 support the upper pack frame 1200 like a pillar, it is possible to ensure the venting area A2 even if the upper cover 220 is locally thermally deformed and its shape changes.

Therefore, the battery pack 1000 of the present disclosure can prevent the venting path inside the battery pack 1000 from being clogged even at high temperatures. That is, the battery pack 1000 of the present disclosure can secure a venting area A2 even at high temperatures, so that, when a thermal runaway phenomenon occurs, venting gas and particles are moved through venting area A2, thereby allowing for rapid heat release. Consequently, the temperature and pressure inside the battery pack 1000 can be reduced to prevent explosion, and suppress external exposure of flames, so that the safety of the battery can be improved.

The above-mentioned battery module and battery pack including the same can be applied to various devices. Such devices can be applied to vehicle means such as an electric bike, an electric vehicle, and a hybrid electric vehicle, but the present disclosure is not limited thereto, and also can be applied to various devices capable of using the battery module and the battery pack including the same, which falls within the scope of the present disclosure.

Although the invention has been described in detail above with reference to preferred embodiments thereof, it will be appreciated by those skilled in the art that the scope of the present disclosure is not limited thereto, and various modifications and improvements can be made in these embodiments without departing from the principles and sprit of the invention, the scope of which is defined in the appended claims and their equivalents.

### [Description of Reference Numerals]

100: battery module
110: battery cell
120: battery cell stack
200: module frame
210: lower frame
220: upper cover
221: venting hole
700: spacer assembly
710: support part
711: first support part
712: second support part
715: coupling part
730: spacer
1000: battery pack
1100: lower pack frame
1200: upper pack frame
A2: venting area

## Claims

1. A battery module comprising:
a battery cell stack in which a plurality of battery cells are stacked;
a module frame housing the battery cell stack; and
end plates covering the front and rear surfaces of the battery cell stack,
wherein the module frame is positioned while covering the battery cell stack and includes an upper cover containing a plurality of holes, which are venting holes, and
wherein a spacer assembly is positioned on the upper cover.

2. The battery module according to claim 1, wherein:
the spacer assembly comprises,
a support part positioned on the upper cover, and
a spacer positioned on the support part.

3. The battery module according to claim 2, wherein:
the spacer has a constant height, and
the height of the spacer is larger than the height of the support part.

4. The battery module according to claim 2, wherein:
the spacer assembly further comprises a first spacer, and a second spacer coupled on the first spacer,
wherein the first spacer comprises,
a (1-1) ^{th} surface that is in contact with the support part,
a (1-2) ^{th} surface that is in contact with the second spacer, and
an insertion hole which is a hole extending in a direction perpendicular to the (1-1)^{th} surface and the (1-2) ^{th} surface so that the second spacer is inserted and positioned.

5. The battery module according to claim 4, wherein:
the second spacer is inserted through the insertion hole of the first spacer, and positioned so as to be hook-coupled to the (1-1)^{th} surface and the (1-2)^{th} surface.

6. The battery module according to claim 5, wherein:
the second spacer comprises,
a (2-1)^{th} protrusion part and a (2-2)^{th} protrusion part that are protruded in a direction perpendicular to a height direction of the second spacer, and
a recessed part provided between the (2-1)^{th} protrusion part and the (2-2)^{th} protrusion part,
wherein the recessed part is an area that is concavely recessed toward the center of the second spacer on the basis of an outer peripheral surface of the (2-1)^{th} protrusion part and the (2-2)^{th} protrusion part.

7. The battery module according to claim 6, wherein:
the (2-1) ^{th} protrusion part is positioned in contact with the (1-1) ^{th} surface, and
the (2-2) ^{th} protrusion part is positioned in contact with the (1-2)^{th} surface.

8. The battery module according to claim 6, wherein:
the outer peripheral surface of the recessed part is positioned in contact with the surfaces constituting the insertion hole.

9. The battery module according to claim 4, wherein:
the first spacer comprises a steel, and
the second spacer comprises an elastic body.

10. The battery module according to claim 2, wherein:
the support part is positioned on the upper cover excluding the venting hole.

11. The battery module according to claim 10, wherein:
the support part comprises,
a first support part that extends along a width direction of the upper cover, and
a second support part that is formed by being branched and extended from the first support part, and is extended along a length direction of the upper cover in a direction perpendicular to the first support part.

12. The battery module according to claim 11, wherein:
the first support part comprises,
a (1-1)^{th} support part positioned at one end of the upper cover, and
a (1-2) ^{th} support part positioned at the other end of the upper cover.

13. The battery module according to claim 12, wherein:
the second support part extends from the (1-1)^{th} support part toward the (1-2)^{th} support part.

14. The battery module according to claim 11, wherein:
the second support part is extended and positioned along a space between the venting holes positioned in the upper cover, and a space between the venting holes and the side surface part of the upper cover.

15. The battery module according to claim 11, wherein:
the support part further comprises a coupling part, which is an area of the first support part that protrudes vertically in a direction opposite to the second support part.

16. The battery module according to claim 15, wherein:
the coupling part includes a coupling hole penetrating the coupling part in a height direction of the coupling part,
a coupling groove is provided in an area of the end plate corresponding to the coupling hole, and
a fastening member is coupled with the coupling groove while passing through the coupling hole.

17. A battery pack comprising:
at least one battery module according to claim 1,
a lower pack frame that houses the at least one battery module; and
an upper pack frame that is positioned by being coupled with the lower pack frame while covering the at least one battery module.

18. The battery pack according to claim 17, wherein:
the spacer assembly comprises a support part positioned on the upper cover, and a spacer positioned on the support part and having a predetermined height,
one surface of the spacer is positioned in contact with the support part, and
the other surface of the spacer is positioned in contact with the upper pack frame.

19. The battery pack according to claim 18, wherein:
the spacer comprises,
a first spacer positioned in contact with the support part, and
a second spacer assembled and coupled to the first spacer and positioned in contact with the upper pack frame.

20. The battery pack according to claim 18, wherein:
a venting area, which is a space equivalent to the height of the spacer, is provided between the upper cover and the upper pack frame.
